Europäisches Patentamt

(19) European Patent Office

Office européen des brevets

(11) Publication number: **0 366 615 B1**

(12) **EUROPEAN PATENT SPECIFICATION**

(45) Date of publication of patent specification: **30.03.94** (51) Int. Cl.⁵: **F24F 5/00**, F24D 3/16,
F24F 13/02

(21) Application number: **89830350.8**

(22) Date of filing: **25.07.89**

(54) Radiant or radiant/ventilating air-conditioning pre-fabricated elements and air-conditioning installation including said elements.

(30) Priority: **03.08.88 IT 4826488**

(43) Date of publication of application:
**02.05.90 Bulletin 90/18**

(45) Publication of the grant of the patent:
**30.03.94 Bulletin 94/13**

(84) Designated Contracting States:
**AT BE CH DE ES FR GB GR LI LU NL SE**

(56) References cited:
**EP-A- 0 278 489**
**DE-A- 3 020 910**
**DE-A- 3 500 880**

(73) Proprietor: **MINISTERO DELL' UNIVERSITA' E DELLA RICERCA SCIENTIFICA E TEC-NOLOGICA**
**76, Lungotevere Thaon di Revel**
**I-00196 Roma(IT)**

(72) Inventor: **Meloni, Stefano**
**Viale Aristide Merloni 45**
**I-60044 Fabriano (AN)(IT)**

(74) Representative: **de Simone, Domenico et al**
**Ing. Barzanò & Zanardo Roma S.p.A.**
**Via Piemonte 26**
**I-00187 Roma (IT)**

Rank Xerox (UK) Business Services
(3.10/3.09/3.3.3)

**Description**

This invention relates to pre-fabricated elements for radiant or radiant/ventilating air-conditioning and to an air-conditioning installation wherein said elements are used.

More detailedly, this invention relates to elements of the above kind designed so as to rationalize the manufacture of radiant floors, thereby enabling a broad flexibility use to be achieved.

Air-conditioning, in particular winter air-conditioning in living rooms, is presently carried out by means of different systems, among which the systems based upon radiation and convection, the systems wherein only radiation is exploited by employment of radiating panels, particularly panels buried in the floor or in the ceiling, and the systems based upon thermoventilation channelled into a false ceiling can be mentioned.

Specific drawbacks of each of said systems, having on the other hand some operation and construction advantages, make their use unfavourable, in particular when the problems attached to their integration with prefabricated building systems are taken into account.

In particular reference is made to dimensional problems, to the restrictions they put to subsequent modification of the rooms, to the lack of an air supply at uniform temperature, to the dirt they generate, to the scarce use flexibility and in addition to the limitations connected to the geometry of the room wherein the installation is to be mounted.

The optimum performances to be achieved from an air-conditioning system are well-known to any skilled in the art and are defined as a result of long and accurate measurements made during a noticeable period of time.

In EP-A-0 278 489, made available to the public after the filing of the present application and therefore to be considered a prior art document under Article 54(3) EPC for Spain and Greece, a pre-fabricated element for radiation air conditioning installations is described, comprising a radiating panel made of shaped steel sheet material, aluminium or copper, an insulating material made with foamed polyurethane, a tube bundle arranged inside the radiating panel, buried into the insulating material layer and attached to the inner surface of the radiating panel by welding or gluing.

In DE-A-3,500,880 a prefabricated element for radiation air-conditioning installations is described, said element comprising a radiating panel of metal sheet material, a layer of insulating material, arranged upon said radiating panel, and a tube bundle for passage of heating water coupled to said radiating panel and to heating water feeding and discharging tubes.

It is an object of this invention to provide an air-conditioning installation that is extremely flexible in use, consists of easily industrially manufacturable, easy to assemble and low cost pre-fabricated elements.

It is a further object of this invention to provide an installation of the abovesaid kind that is comprised of radiation/thermo-ventilation air-conditioning pre-fabricated elements, so as to furnish an optimum centralized air-conditioning system.

It is another object of this invention to provide pre-fabricated elements adapted to permit in a single heating member radiation and thermo-ventilation air-conditioning modes independently of one another, so as to create to a maximum extent a centralized installation, for instance in so far as the radiation mode is concerned, but additionally provided with an autonomous component, for instance in so far as the thermoventilation mode is concerned, to enable the user to autonomously choose his own comfort condition.

These and further results are attained, according to this invention, by creating modular pre-fabricated elements consisting of a panel of metallic material, to which radiating tubes are coupled so as to guarantee a heat transmission in the contact point as good as possible, a layer of foamed polyurethane or other suitable material adapted to give flexural and torsional stiffness to the structure, and in which, thermoventilation channels are created.

As far as said pre-fabricated elements are concerned, optimum technical solutions are provided to distribute the heat into the room and to finish the installation.

Specific subject-matter of this invention, therefore, is a pre-fabricated element for radiation air-conditioning installations according to claim 1.

In such arrangement, the tubes can be parallel connected, with the heating water supplying piping being arranged at the inlet and the discharge one being arranged at the outlet of the tube bundle from the pre-fabricated element; the tubes can also be serially connected, with the supplying piping being connected to the first tube of the pre-fabricated element and with the discharge piping or the connection piping to a subsequent element being connected to the last tube of the bundle; each tube of the bundle being connected to the adjacent tube by means of connection tube segments.

Preferably, the tubes of the pre-fabricated element, when this is cut to measure, terminate flush with the metal sheet panel and with the insulating material layer, so that they will be connected to the water supplying and discharging plant outside the pre-fabricated element, by means of suitable connection members that penetrate into the tubes and ensure sealing and clamping effects to be obtained.

During the assembling steps of the installation, a layer of insulating material will be provided upon the connection, in series or in parallel with respect to the heating water supplying and discharging plant, in order to prevent loss of heat to any unwanted direction.

The serial connection of the tubes can also be carried out completely inside the pre-fabricated element, by means of connection segments perpendicular to the extension of the tube bundle; in this case, suitable marks showing said connection segments should be provided outside the pre-fabricated element in order to measure step, a cut be effected in an area not enabling the terminal tube of the element to be connected to the one of the adjacent element.

In a second embodiment of the pre-fabricated element according to the invention, outside said metal sheet panel, a shaped groove is created to fixedly receive the heating water piping, which will be continuously effected in accordance to the shape of said groove, in order to achieve the desired radiating surface.

A cover slat or ledge, preferably fixedly mounted, can be furthermore provided for surface finishing of said pre-fabricated element.

Preferably, pre-fabricated elements having 6 m length and 1.2 m width, with four parallel tubes spaced apart of 30 cm.

The pre-fabricated elements according to the invention can be manufactured also for use in radiation/ventilation air-conditioning systems.

A first embodiment of radiation/ventilation elements comprises channels created in said insulating material layer in correspondence to the inner surface of the metal sheet panel, in order to cause the air to be heated by means of a thermal exchange with the heated metal sheet of the pipings.

Preferably, said channels, which will be defined "interference channels", will have an internal corrugated and ondulating configuration in order to increase the air turbulence and to enhance the heat exchange.

In a second embodiment of the radiation-ventilation element according to the invention, the air flow channels are arranged in the upper part of the insulating layer, spaced apart from the metal sheet panel and they are upwardly insulated by means of an additional layer of insulating material: in this approach a thermo-fan is provided for introduction of warm air. This approach can be defined as being "without turbulence", because the air temperature does not depend on the temperature of the metal sheet panel.

An air-conditioning installation, including radiation or radiation/ventilation elements as above disclosed will comprise a number of such elements arranged side by side, preferably fixed to the ceiling, and gableboard members arranged between said elements and the walls so as to offer an aesthetical finish and to compensate any cutting inaccuracies.

In particular, for radiation-ventilation elements "with interference", said gableboard member is arranged at the side of the false ceiling formed by element wherefrom thermoventilation air is drawn (inlet to said channels), a passage way perpendicular to the thermoventilation channels and provided with one or more fans, depending on the room dimensions, and with air discharging nozzles, preferably spaced apart at a distance of 3 to 4 m being provided at the opposite side.

For air-conditioning installations having elements "without interference", the gableboard member will be formed by a closed element or "plenum" wherein the thermo-fan is received, while the passageway arranged at the opposite side will be provided only with air discharging nozzles.

It will be clearly evident that the gableboard member, besides furnishing a support for ceiling lamps and other fittings, will act also as a finishing member in so far as it covers the connection piping outside the pre-fabricated elements as well as the cutting-to-measure inaccuracies of said elements.

In any embodiment of the pre-fabricated elements according to this invention, a channel aimed at receiving electric wires can be made into the insulating material layer.

Lighting accessories, power sockets or even circuit breakers can easily be arranged in positions corresponding to the above mentioned channels.

The pre-fabricated elements according to this invention have been stated heretofore as intended for being mounted in false ceilings, however, they are also adapted for being mounted to walls or, if a quick and cheap assembly is desired, they can be arranged in walking floorings.

Since the concerned elements are of the so-called structural type, they can be used to manufacture the walls or the floors themselves of a building partially or completely made of light pre-fabricated components, so that the arrangement of the air-conditioning installation turns out to be particularly cost-effective and extendable to application fields other than the residential buildings or service plants such as stables, stores, banks for "warm bed" greehouses, and so on.

Reference to use of such pre-fabricated elements according to this invention in heating installation has been made, but it should be understood that they can be used also in room cooling installations; in this case, the installation shall be provided with control means designed to prevent that the surface temperature of the concerned elements descend below the dew point so as to prevent unwanted condensation to take place.

The pre-fabricated elements according to the invention can be also used for the manufacture of refrigerator room walls, where condensation or build-up of hoarfrost are not a problem: in fact, the air circulation in suitable channel ensures a uniform temperature in the room.

In the embodiment wherein the pipings are arranged outside the element, such pipings being anyway perfectly accessible and made by a continuous piping length or with a minimum number of connection members, the pre-fabricated element according to the invention is particularly suitable for the manufacture of heating installations or cooling installations based upon a frigorific cycle or even heat pump installations wherein the frigorific fluid is directly circulated in piping having a very reliable and perfectly controllable tightness.

This makes it possible to avoid the need to use an intermediate heat exchanger between the fluid of the refrigerator apparatus and the heating fluid of the distribution installation that is always a cause of efficiency loss with respect to the efficiency that otherwise could be achieved, due to the temperature differentials needed in the heat exchange.

The manufacture of air-conditioning installations wherein use is made of pre-fabricated elements of the radiation-ventilation mixed type according to this invention enables the adjustment of the heat flow rate and of the heat demand by adjustment of the air flow rate and in addition it enables to achieve an outlet air speed such that any stratification is avoided and optimum comfort conditions are maintained.

As far as installations "with interference" are concerned, tangential or helicoidal blowers or fans will preferably used.

Referred embodiments of the invention will be hereinafter described with particular reference to the annexed drawing, wherein:

Figure 1 shows a cross-sectional view of an embodiment of a pre-fabricated element according to the invention;

Figure 2 shows a detail of the element shown in Figure 1;

Figure 3 shows a cross-sectional view of another embodiment of a pre-fabricated element according to the invention;

Figure 4 shows a detail of the element shown in Figure 3;

Figure 5 shows a detail of the system for coupling the radiating tubes to the metallic material panel of the element according to this invention;

Figure 6 shows a longitudinal cross-sectional view of an air-conditioning installation including the pre-fabricated element of Figures 1 and 2; and

Figure 7 shows a longitudinal cross-sectional view of an air-conditioning installation including the pre-fabricated element of Figures 3 and 4.

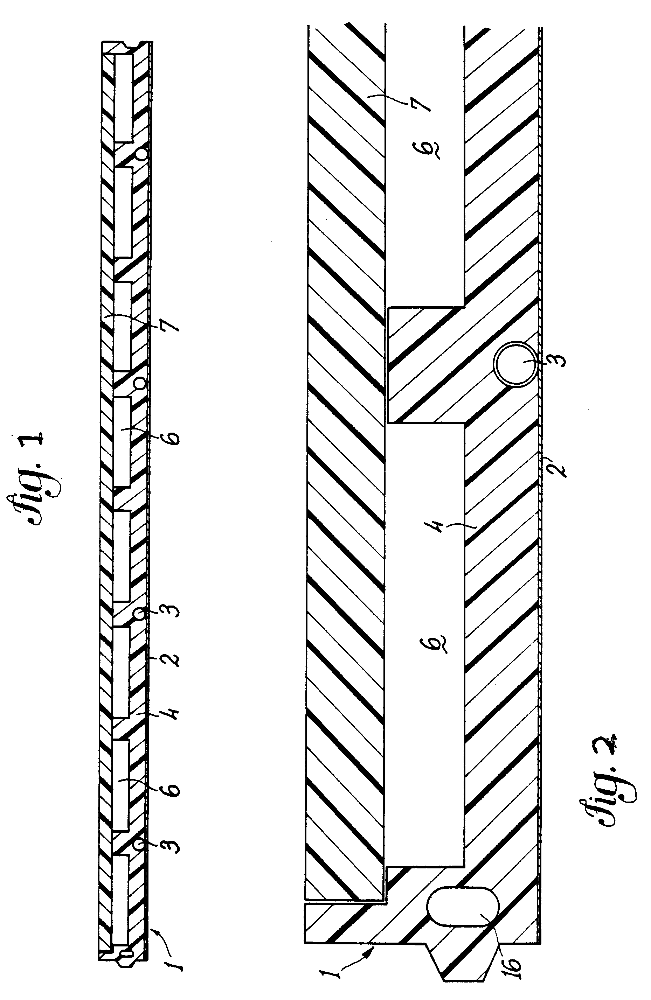

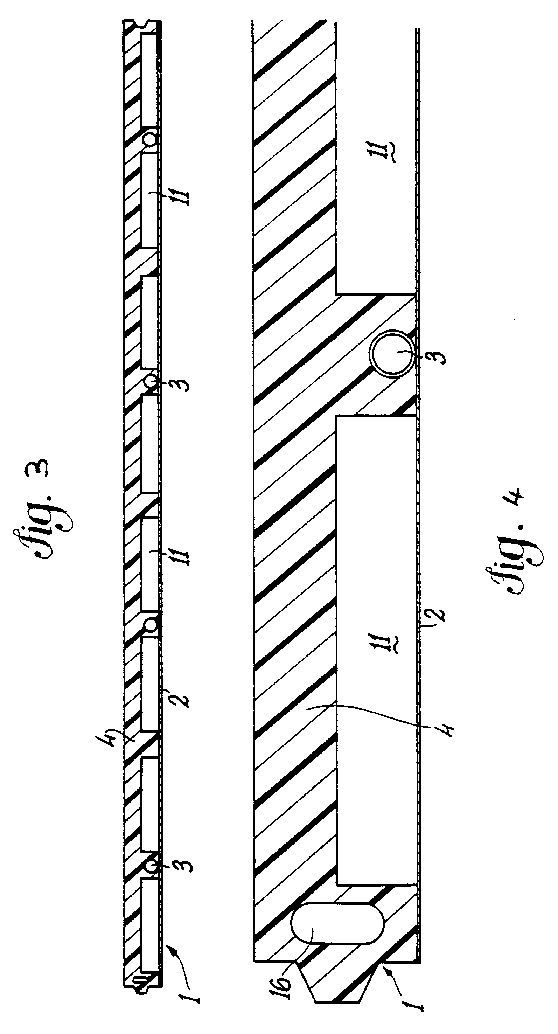

Element 1 as shown in Figures 1 and 2 is designed so as to make a mixed radiation/thermoventilation regimen possible, with autonomous generators for the hot water to be introduced into tubes 3 and for the warm air needed for thermoventilation.

In this case, warm air flows through channel 6 arranged so that panel 2 and tubes 3 are not lapped on. A plate 7 of insulating material is provided upon channels 6 in order to reduce transmission of heat to the floor of the overlaying room.

Transversely to adjacent elements 1, a "plenum" 8 (see Figure 6) will be provided to force warm air into channels 6 by means of a fan (not shown) arranged in said "plenum".

The distribution of the warm air into the room will be performed by means of nozzles 9 arranged along a channel 10 transversely positioned with respect to elements 1, at a side of element 1 opposed to the "plenum" 8.

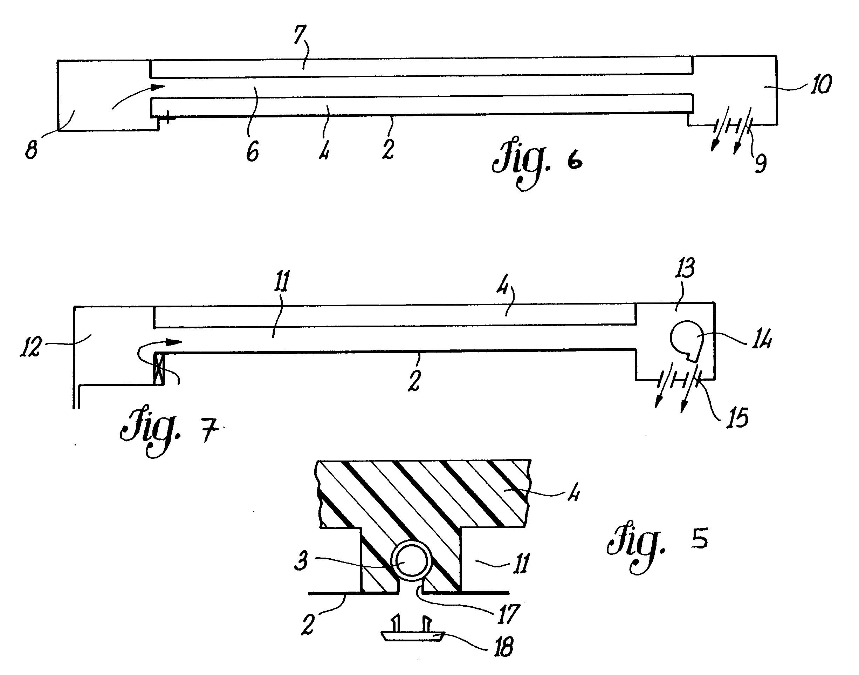

A mixed regimen, air-conditioning element 1 is shown in Figures 3, 4 and 7, wherein the heat of panel 2 is utilized to heat the air.

In this case, ventilation channels 11 are provided corresponding to panel 2, so that thermal insulation of the air upwardly is achieved by means of the polyurethane layer 4.

The air-conditioning installation shown in Figure 7 includes a "gableboard" member 12, open to the room, through which the thermoventilation air is drawn and a transversal channel 13 opposed thereto, wherein an exhaust fan 14 and nozzles 15 are provided to draw air from channels 11 and to discharge it into the room, respectively.

"Plenums" 8 and 10 of Figure 6 and 12 and 13 of Figure 7 are made with cross-sectional areas for air flow that are much larger than those of channels 6 or 11 shown in the same Figures; consequently, the air pressure drop between the inlet and the outlet of the "gableboards" is concentrated in channel 6 or 11; this assures a uniform distribution of air in said parallel channels.

A channel 16 to receive electric wires is provided both in element 1 of Figure 2 and in element 1 of Figure 4.

Channels 11 can be made with corrugated and undulating inner surface so as to increase the air turbulence and also the heat exchange with the panel 2 heated by tubes 3.

A second type of connection between panel 2 tubes 3 is shown in Figure 5. It is carried out by means of an outer groove formed along panel 2 wherein tube 3 is fixed; in this case tube 3 does not need to have connection portions because it can be made continuous and completely embraced by the surface of element 1 or with said loops at the ends of the channels and of the panels hidden by the gableboard. Of course, the pipings according to Figure 7 are assembled in the field, after the panels are fixed to the ceiling. It will be sufficient that connection members be provided with a water supply pipe and with a water discharge pipe.

It will be possible therefore to manufacture element 1 according to the most advantageous geometry in respect of the specific requirements, thereby creating a radiating surface as good as possible.

A cover slat or ledge 18 is provided for fixing in correspondence to said groove 17.

Element 1 of Figure 3 is manufactured by attaching the tube to the already profiled metal sheet in a continuous step; separately by contemporaneously, insulating plate 4 is produced by means of a continuous foaming step and thereafter it is anchored to metal sheet 2 in positions corresponding to tubes 3 by means of a further foaming step at the junction points.

Some exemplary computations will be hereinafter set forth in respect of effective applications of pre-fabricated elements according to the invention, but it should be kept in mind that, for comfort reasons, the ceiling temperature should not go beyond 32°C in rooms of about 2.70 m height.

The following examples are to be construed under the Italian Rules that define the limits of the maximum heat requirement for dispersion and air replacement ($q_d$); with $q_{d\ base}$ the minimum heat supply has been designated to maintain a room in stand-by conditions (about 10°C).

## EXAMPLE 1

Standard Room

| | |
|---|---|
| External temperature | $T_e = -5°C$ |
| Room temperature | $T_a = 20°C$ |
| Maximum heat requirement | $q_{d\ max} = 66\ W/m^2$ |
| Base requirement | $q_{d\ base} = 46,5\ W/m^2$ |
| Ventilation air flow rate | $ma = 1,5\ m^3/h.m^2$ |
| Power drawn from the room for ventilation | $q_v = 12\ W/m^2$ |
| Power to be supplied by the pre-fabricated element | $q_{tot} = 78\ W/m^2$ |

This power can be obtained by means of a panel operating solely as radiant panel.
In fact,

|  | d | b |
|---|---|---|
| Distance between the axes of the tubes | 0.3 | 0.6 |
| Fluid temperature (°C) | 47 | 70 |
| Power supplied (W/m$^2$) | 78 | 78 |
| Element temperature (°C) | 30 | 30.2 |

## EXAMPLE 2

| Critical room | |
|---|---|
| $T_e$ = -10°C<br>$T_a$ = 20°C<br>$q_{d\ max}$ = 134 W/m$^2$<br>$q_{d\ base}$ = 94 W/m$^2$<br>Ventilation air flow rate (for meeting rooms)<br>ceiling height | <br><br><br><br>$m_a$ = 22.5 m$^3$/h.m$^2$<br>3 - 3.5 m |

It is statutorily necessary to provide for a heat regeneration. If the efficency index of the heat regenerator is 0.5, a power of q = W/m$^2$ to be furnished to heat the ventilation air to 20°C.

The concerned element is adapted to furnish by radiation q = 85 W/m$^2$ with an average temperature $T_e$ = 31°C. The balance of the power to be furnished should be obtained by thermoventilation. Such power is $q_v$ = 49 W/m$^2$.

The air blown from the nozzles will have a temperature

$$T_{ub} = (q_d - q_{rad})/M_a C_p + T_a = 26,8$$

The element will have to supply the net power

$$q_{tot} = 85 + 43 + 49 = 177 \text{ W/m}^2.$$

Assuming that 1 person/4 m$^2$ is in the room and that such a person furnishes 100 Kcal/h = 116 W, we have

$$q_{tot} = 177\text{-}116/4 = 148 \text{ W/m}^2.$$

Such a power can be supplied by a panel having the following characteristics:

| distance between the axes of the tubes | 0.3 m |
|---|---|
| fluid temperature | 64°C |
| panel power | 148 W/m$^2$ |
| panel temperature | 32.8°C |

## VENTILATION CHANNELS

The flow rate of 162 m$^3$/h (panel having 6 m length and 1.2 m width) can be dealt with air flow channels having 0,04 m height and 1m net width.

The average speed of the air is

V = 1.125 m/sec.

## Claims

1. Pre-fabricated element (1) for radiation air-conditioning installations, comprising a radiating panel (2) of metal sheet material, a layer (4) of insulating material, arranged upon said radiating panel (2), and a tube bundle (3) for passage of heating water, coupled to said radiating panel (2) and to heating water feeding and discharging tubes, characterized in that channels (10,11) created in said insulating material layer (4) are provided in front of the inner surface of the sheet material radiating panel (2) for enabling the thermoventilation air to flow therethrough.

2. Pre-fabricated element according to claim 1, characterized in that outside said metal sheet radiating panel (2) a shaped groove (17) is formed in the outer surface of the metal sheet radiating panel (2) in order to restrainedly receive the heating water tube assembly, said assembly, comprising said tube bundles (3), being continuosly designed according to the shaped profile of said groove.

3. Pre-fabricated element according to claim 2, characterized in that a shaped cover (18) is provided to cover said groove, adapted to be restainedly coupled to said groove.

4. Pre-fabricated element according to claim 1, characterized in that said tubes (3) are parallel connected to the pipes that supply the heating water to the pre-fabricated element (1) and that discharge the water therefrom.

5. Pre-fabricated element according to claim 1, characterized in that said tubes (3) are serial connected, the first of then being connected to the pipe supplying the heating water and the least of them being connected to the pipe discharging said water to re-cycling or the subsequent pre-fabricated element (1).

6. Pre-fabricated element according to any of claims 1,4 or 5, characterized in that said tubes (3) terminate flush with the side edges of the radiating panel (2) sheet material and of the insulating material layer (4) so that the connections between the tubes (3) themselves and the heating water supplying and discharging pipes are carried out by suitable connection members outside the pre-fabricated element (1) itself.

7. Pre-fabricated element according to claim 6, characterized in that, on the upper side of said outer connections with respect to its surface, a layer of insulated material is provided.

8. Pre-fabricated element according to claim 5, characterized in that the serial connection of said tubes (3) is carried out inside the surface covered by said pre-fabricated element (1).

9. Pre-fabricated element according to claim 1, characterized in that said channels (10,11) have a corrugated or ondulating inner shape.

10. Air-conditioning installation characterized in that one or more pre-fabricated elements according to any of claims 1 or 9 are included therein.

11. Air-conditioning installation according to claim 10, characterized in that a gableboard element is arranged at an end of said one or more pre-fabricated elements, in lower position with respect to the pre-fabricated elements themselves, in order to create a passageway for inlet of thermoventilation air, and a closed channel is arranged at the other side, said closed channel being provided with nozzles for discharging air into the room and with a blower for circulation of said air.

12. Pre-fabricated element according to any claims 1-3, characterized in that channels for thermoventilation air flow created in the upper portion of said insulating material layer (4) are provided in distal position with respect to said radiating panel (2), and in that a layer of insulating material is arranged upon said channels (10,11); the thermoventilation air being circulated and heated by means of a separate thermofan.

13. Air-conditioning installation characterized in that one or more pre-fabricated elements (1) according to claim 12 are included therein.

7

**14.** Air-conditioning installation according to claim 13 characterized in that a gableboard element (12) is arranged all along the perimeter of said one or more pre-fabricated elements (1), in a lower position with respect to the pre-fabricated elements (1) themselves, in order to cover the connection pipings of each of said pre-fabricated elements (1).

**15.** Air-conditioning installation according to claim 12, characterized in that a closed gableboard element (12) or "plenum" is arranged at an end of said one or more pre-fabricated elements (1) so as to receive the thermo-fan used for introduction of the thermoventilation air, and a closed channel, provided with nozzles for discharging air into the room, is arranged at the other end thereof.

**Patentansprüche**

**1.** Vorgefertigtes Element (1) fuer Strahlung-Klimaanlagen, mit einer Strahlungstafel (2) aus blattfoermigem Metallstoff, einer ueber der vorgenannten Strahlungstafel (2) angeordneten Isolierschicht (4) und einem Heisswasser fuehrenden und mit Zu- und Abfussroehren fuer das Heisswasser verbudenen Rohrbuendel (3), dadurch gekennzeichnet, dass in der vorgenannten Isolierschicht (4) gegenueber der Innenflaeche der Strahlungstafel (2) aus blattfoermigen Metallstoff liegende Kanaele (10,11) zum Durchfluss der Thermoventilationsluft vorgesehen sind.

**2.** Vorgefertigtes Element nach dem Anspruch 1, dadurch gekennzeichnet, dass an der Oberflaeche des vorgenannten Strahlungstafel (2) aus blattfoermigen Metall eine Formnut (17) zur Aufnahme der die vorgenannte Rohrbuendel enthaltenden Heisswasser einheit geformt ist, wobei die vorgenannte, die vorgenannten Rohrbuendel (3) enthaltende Einheit kontinuierlich gemaess dem Formprofil der vorgenannten Nut erzeugt wird.

**3.** Vorgefertigtes Element nach dem Anspruch 2, dadurch gekennzeichnet, dass zur Bedeckung der vorgenannten Nut ein Formdeckel (18) vorgesehen ist, der an die vorgenannte Nut dicht gekuppelt ist.

**4.** Vorgefertigtes Element nach dem Anspruch 1, dadurch gekennzeichnet, dass die vorgenannten Rohre (3) mit den das Heisswasser an das vorgefertigte Element zufuehrenden und das Wasser aus demselben abfuehrenden Leitungen parallel verbunden sind.

**5.** Vorgefertigtes Element nach dem Anspruch 1, dadurch gekennzeichnet, dass die vorgenannten Rohre (3) seriengeschaltet sind, wobei das erste Rohr mit der das Heisswasser zufuehrenden Leitung und das letzte Rohr mit der das Wasser abuefrenden und zum naechsten vorgefertigten Element zufuehrenden Leitung verbunden ist.

**6.** Vorgefertigtes Element nach je einem der Ansprueche 1,4 oder 5, dadurch gekennzeichnet, dass die vorgenannten Rohre (3) fluchtend mit den Seitenkanten der Strahlungstafel (1) aus blattfoermigen Material und der Isolierschieht (4) auslaufen, so dass die Verbindugen zwischen den Rohren (3) selbst und den das Heisswasser zu- und abfuehrenden Leitungen durch angebrachte Auschlusselemente aussserhalb des vorgefertigten Elementes (1) durchgefuehrt werden.

**7.** Vorgefertigtes Element nach dem Anspruch 6, dadurch gekennzeichnet, dass an der oberen Seite der vorgenannten, gegenueber seiner Oberfleache aeusseren Anschluesse eine Schicht aus Isoliermaterial vorgesehen ist.

**8.** Vorgefertigtes Element nach dem Anspruch 5, dadurch gekennzeichnet, dass die Serienverbindung der vorgenannten Rohre (3) innerhalb der durch das vorgefertigtes Element (1) bedecketen Flaeche durchgefuehrt ist.

**9.** Vorgeferitgtes Element nach dem Anspruch 1, dadurch gekennzeichnet, dass die vorgenannten Kanaele (10,11) eine gefaltene oder gewellte innere Form aufweisen.

**10.** Klimaanlage dadurch gekennzeichnet, dass sie ein oder mehrere vorgefertigte Elemente nach den Anspruechen 1 bis 9 enthaelt.

**11.** Klimaanlage nach dem Anspruch 10, dadurch gekennzeichnet, dass ein "Lamberquin" Element an einen Ende der vorgenannten ein oder mehreren vorgefertigten Elemente an einer gegenueber denselben niedrigeren Stelle angeordnet sind, um einen Durchgang zum Einfuehren der Thermoventilationsluft zu schaffen und dass ein geschlossener Kanal an der anderen Seite angeordnet ist, der mit Dusen zum Ausblasen der Luft in der Raum und mit einem Geblaese zum Luftumlauf versehen ist.

**12.** Vorgefertigtes Element nach je einem der Ansprueche 1 bis 3, dadurch gekennzeichnet, das die Kanaele fuer die Thermoventilationsluft im oberen Teil des vorgenannten Isolierschicht (4) in Abstand von der vorgenannten Strahlungstafel (2) vorgesehen sind und dass eine Isolierschicht ueber den vorgenannten Kanaelen (10,11) angeordnet ist, wobei die Thermoventilationsluft durch Thermo-Luefter in Umlauf gesetzt und erwaermt wird.

**13.** Klimaanlage dadurch gekennzeichnet, dass sie ein oder mehrere vorgefertigtes Elemente (1) nach dem Anspruch 12 enthaelt.

**14.** Klimaanlage nach dem Anspruch 13, dadurch gekennzeichnet, dass ein "Lamberquin" - Element (12) laengs dem Umfang der vorgenannten ein oder mehreren vorgefertigten Elemente (1) an einer gegenueber denselben niedrigeren Stelle angeordnet ist, um die Verbindungsleitungen eines jeden vorgefertigten Elementes (1) zu ueberdecken.

**15.** Klimaanlage nach dem Anspruch 12, dadurch gekennzeichnet, das ein geschlossenes "Lamberquin" -Element oder "Plenum" an einem Ende der vorgenannten ein oder mehreren vorgefertigten Elemente (1) zur Aufnahme des Thermoluefters zur Einfuehrung der Thermoventilatiosluft angeordnet ist und dass ein geschlossener, mit Duesen zum Einblasen der Luft in den Raum versehener Kanal an der anderen Seite derselben angeordnet ist.

## Revendications

**1.** Elément préfabriqueé (1) pour installations de conditionnement d'air par radiation, comprenant un panneau radiant (2) d'un matériel à feuilles de métal, une couche (4) de matériel isolant, placée sur ledit panneau radiant (2) et un faisceau de pipes (3) pour passage d'eau de chauffage, enclenché audit panneau radiant et à les pipes d'alimentation et de déversement d'eau de chauffage, caractérisé en ce que de canals (10, 11) sont réalises dans ladite couche de matériel isolant (4) vis-à-vis de la surface intérieure du penneau radiant (2) de matériel à feuilles pour laisser passer l'air de thermoventilation à travers ce panneau radiant.

**2.** Elément préfabriqué selon la revendication 1, caractérisé en ce que sur la surface extérieure du panneau radiant (2) à feuilles de métal une rainure façonnée (17) est formée pour recevoir solidement l'ensemble de pipes d'eau de chauffage, cet ensemble, comprenant lesdits faiseaux de pipes, étant réalisé continuellement selon le profil façonné de ladite rainure.

**3.** Elément préfabriqué selon la revendication 2, caracérisé en ce que un couvercle façonné (18) est prévu pour couvrir ladite rainure, s'engageant solidement dans la même.

**4.** Elément préfabriqué selon la revendicazion 1, caractérisé en ce que lesdits pipes (3) sont jointes en parallèle aux pipes qu'allimentent l'eau de chauffage audit élément préfabriqué (1) et qui déversent l'eau du même.

**5.** Elément préfabriqué selon la revendication 1, caractérisé en ce que lesdits pipes (3) sont jointes en serie, la premiere de cette pipes étant jointe à un conduite alimentant l'eau de chauffage et la dérniere étant jointe au pipe déversant l'eau à l'élément préfabriqué successif.

**6.** Elément préfabriqué selon une quelconque des revendication 1, 4 ou 5, caractérisé en ce que les dites pipes (3) sont affleurées aux bord latérals du panneau radiant (2) de material à feuilles et de la couche de matériel isolant (4) de façon que les connexions entre les pipes (3) et les conduites d'alimentation et de déversement de l'eau de chauffage sont réalisées par des éléments de connexion à l'extérieur de l'élément préfabriqué (1).

**7.** Elément préfabriqué selon la revendication 6, caractérisé en ce que sur le côté supérieur de lesdites connexions, extérieur au regard de sa surface, une couche de matériel isolant est prevue.

**8.** Elément préfabriqué selon la revendication 5, caractérisé en ce que le joint en serie de lesdits pipes (3) est realisé à l'intérieur de la surface couverte par ledit élément préfabriqué (1).

**9.** Elément préfabriqué selon la revendication 1, caractérisé en ce que lesdits canels (10, 11) ont une forme intérieure plissée ou ondulée.

**10.** Installation de conditionnement caractérisé en ce qu'il comprend un ou plusieurs éléments préfabriqués selon les revendications 1 ou 9.

**11.** Installation de conditionnement, caractérisé en ce que un élément à lambrequin est placé à un bout desdit un ou plusieurs éléments préfabriqués dans une position inférieure au regard de ces éléments préfabriqués afin de créer un passage d'introduction de l'air de thermoventilation et un canal fermé est placé à l'autre côte, ledit canal fermé étant muni des tuyéres pour déverser l'air dans le pièce et d'un soufflante pour faire circuler l'air.

**12.** Elément préfabriqué selon une quelconque des revendication 1-3, caractérisé en ce que les canals pour l'air de thermoventilation, créés dans la partie supérieure de ladite couche (4) de matériel isolant, sont espacés au regard dudit panneau radiant (2) et en ce que une couche de matériel isolant est placées sur lesdits canals (10, 11), l'air de thermoventilation étant faite circuler et étant chauffée par un thermoventilateur separé.

**13.** Installation de conditionnement caractérisé en ce qu'il comprend un ou plusieurs éléments (1) selon la revendication 12.

**14.** Installation de conditionnement selon la revendication 13, caractérisé en ce que un élément à lambraquin (12) est placé le long du périmétre desdits un ou plusieurs éléments préfabriqués (1) dans une position inférieure au regard des éléments préfabriqués (1) afin de couvrir les pipes de connexion de chacun desdits élément préfabriqués (1).

**15.** Installation de conditionnement selon la revendication 12, caractérisé en ce que un élément à lambrequin fermé (12) ou "plenum" est placé à un bout desdits un ou plusieurs éléments préfabriqués (1) de façon à recevoir le thermoventilateur employé pour introduire l'air de thermoventilation et que un panneau fermé, muni des tuyères pour déverser l'air dans le pièce, est placé à leur autre bout.

## Fig. 1

## Fig. 2

Fig. 3

Fig. 4

Fig. 6

Fig. 7

Fig. 5

EP 0 366 615 B1